# EUROPÄISCHE PATENTSCHRIFT

(11) **EP 1 516 402 B1**
(45) Veröffentlichungstag und Bekanntmachung des Hinweises auf die Patenterteilung: **04.03.2009**
(21) Anmeldenummer: 03740340.9
(22) Anmeldetag: 25.06.2003
(51) Int. Cl.: H02G 3/32

(54) **KABELHALTERUNG**
CABLE HOLDING DEVICE
ATTACHE DE CABLE

(30) Priorität: 25.06.2002 DE 20210024 U
(43) Veröffentlichungstag der Anmeldung: 23.03.2005
(73) Patentinhaber: Faurecia Innenraum Systeme GmbH, 76767 Hagenbach (DE)
(72) Erfinder: SCHILLES, Wilfried, 36205 Sontra (DE); WANDTKE, Sebastian, 37073 Göttingen (DE)
(74) Vertreter: Pfenning, Meinig & Partner GbR
(86) Internationale Anmeldenummer: PCT/EP2003/006712
(87) Internationale Veröffentlichungsnummer: WO 2004/001923

(56) Entgegenhaltungen:
- EP-A- 0 276 926
- JP-A- 09 159 062
- US-A- 6 087 593
- US-A1- 2002 000 499

## Beschreibung

Die vorliegende Erfindung betrifft eine Kabelhalterung nach dem Oberbegriff des Anspruchs 1.

Kabelhalterungen werden in verschiedenen technischen Bereichen benötigt. Insbesondere bei der Fixierung von Kabeln an beweglichen Objekten, wie z.B. Kraftfahrzeugen, stellen sich besondere Aufgaben. Hier ist das Ziel, dass trotz Bewegung des Objektes ein zu fixierendes Kabel in seiner Stellung gehalten wird und nicht durch Schleifen an umliegenden Gegenständen beschädigt wird.

Es sind zur Fixierung elektrischer Kabel an Kraftfahrzeugen bereits Kabelhalterungen bekannt. Diese weisen als Umfangselemente zum Fixieren des Kabels zwei zueinander geneigte Stege auf, welche eine Klammer zur Fixierung eines Kabels bilden. Diese Stege mit einem Rastfuß zum Festrasten der Kabelhalterung in einer Öffnung einer Kraftfahrzeugtür oder dergleichen versehen.

Die US 6 087 593 weist eine Kabelhalterung auf, wobei die Kabelhalterung zumindest ein Umfangselement zum Fixieren des Kabels und einen Rastfuß zum Festrasten der Kabelhalterung in einer Öffnung einer Kraftfahrzeugtür oder dergleichen auf, wobei das Umfangselement zum vollumfänglichen Umfassen des Kabels verschließbar ist.

Die EP 0 276 926 A1 weist eine Kabelhalterung auf, welche ebenfalls über ein Umfangselement zum Fixieren des Kabels und eine Reihe von Rastfüßen zum Festrasten der Kabelhalterung in einer Öffnung einer Kraftfahrzeugtür verfügt. Dabei kann das Umfangselement zum vollumfänglichen Umfassen des Kabels in unterschiedlichen Positionen verschlossen werden.

In der US 2002/0000499 A1 wird ein Fixierelement für ein mit Furchen versehenes Rohr, welches auch Kabel führen kann, beschrieben. Das Fixierelement weist dabei einen Rastfuß zum Festrasten der Kabelhalterung in einer Öffnung auf, wobei das Fixierelement zum vollumfänglichen Umfassen des mit Furchen versehenen Rohres verschließbar ist.

Diese Kabelhalterungen nach dem Stand der Technik weisen mehrere Nachteile auf.

Zum einen muss die Kabelhalterung in ihrer Größe relativ genau auf das zu fixierende Kabel abgestimmt sein. Weist ein Kabel bzw. ein Kabelbaum einen zu großen Durchmesser auf für die klammerartige Halterung, kann diese zerstört werden. Weist ein Kabel einen zu geringen Durchmesser auf, kann er aus der Kabelhalterung herausrutschen, so dass diese nicht mehr ihre Haltefunktion erfüllen kann.

Zum anderen ermöglicht die bekannte Kabelhalterung keine befriedigende Führung des zu haltenden Kabels. Die Halterung weist in Richtung der Kabelachse meist eine zu geringe Länge auf, um das Kabel ausreichend führen zu können. Wird diese Länge bei einer bekannten Kabelhalterung erhöht, ist diese unter Umständen nicht mehr einfach bedienbar, da die Steifigkeit der Klammerstege mit steigender Länge erhöht wird bzw. ein Einfädeln stark erschwert wird.

Der vorliegenden Erfindung liegt daher die Aufgabe zugrunde, eine Kabelhalterung zu schaffen, welche einerseits weitgehend unabhängig vom Durchmesser eines zu fixierenden Kabels einen sicheren Halt bietet, darüber hinaus eine gute Führungseigenschaft insbesondere für flexible Kabel bildet und außerdem leicht zu montieren und günstig herzustellen ist.

Diese Aufgabe wird durch eine Kabelhalterung nach Anspruch 1 gelöst.

Die Erfindung ist durch die Merkmale des unabhängigen Anspruchs 1 definiert. Die Erfindung sieht vor, dass die Kabelhalterung einen Keil mit einer zugeordneten Keilführung zum Aufspreizen und Fixieren des Rastfußes in der Öffnung aufweist. Diese Weiterbildung herkömmlicher Schnappnasen hat den Vorteil, dass quasi unabhängig von den Eigenschaften des Umfangsrandes der Öffnung ein Fixieren der Schnappnasen (kraftunterstützt durch Keileinführung) möglich ist. Die Öffnung muss daher z.B. nicht kostenaufwendig an ihren Rändern entgratet werden, ein etwaiger Grat in der z.B. aus Metall bestehenden Umfangsberandung könnte hier unter Umständen sogar den Halt einer aus Kunststoff bestehenden Schnappnase verbessern, da der Kunststoff sich hier im Metall zusätzlich verkrallt. Bevorzugte Ausgestaltungen sind in den abhängigen Ansprüchen definiert.

Eine vorteilhafte Weiterbildung sieht vor, dass das Umfangselement einen zu öffnenden Schnappverschluss aufweist. Dies heißt, dass das Umfangselement reversibel zu öffnen und zu schließen ist, so dass auch im Falle von Reparaturen bzw. nachzurüstenden Kabeln eine leichte Montage möglich ist. Insbesondere bietet es sich hier an, dass das Umfangselement zwei über ein Scharnier verbundene Zylinderhälften aufweist. In diesem Falle weist das Umfangselement senkrecht zur Einführrichtung des Kabels (d.h. zur Längsachsenrichtung des Kabels) einen im Wesentlichen ringförmigen Querschnitt auf, selbstverständlich sind jedoch auch andere Querschnitte (vieleckige bzw. ovale Querschnitte etc.) möglich. Das Umfangselement weist somit einen Führungsmantel auf, welcher axial zur Einführrichtung des Kabels (d.h. in Richtung der Kabellängsachse) verläuft. Hierdurch wird auf einer gewünschten Länge eine Schlaufenbildung des Kabels verhindert, der Führungsmantel muss jedoch nicht zwangsweise eine Zylinderform haben, es sind auch gekrümmte Bauformen (S-, V- bzw. W-förmige Krümmung in Richtung der Kabellängsachse) möglich. Hierbei weist der Führungsmantel in Einführrichtung des Kabels vorzugsweise eine Länge des zwei- bis zehnfachen Innendurchmessers des Umfangselementes auf.

Eine besonders vorteilhafte Weiterbildung sieht vor, dass das Umfangselement bzw. der Führungsmantel in Einführrichtung des Kabels aufgeweitete Enden aufweist. Die Enden weisen also z.B. "Trompetenform" auf. Hierdurch wird ein scharfes Abknicken des Kabels, welches eine Beschädigung des Kabels verursachen könnte, verhindert, gleichzeitig wird die Einführung bzw. das Durchziehen von Kabeln in Einführrichtung (d.h. entlang der Zentralachse des Führungszylinders) erleichtert.

Eine weitere vorteilhafte Weiterbildung sieht vor, dass der Führungsmantel mit dem Rastfuß der Kabelhalterung über Abstützrippen verbunden ist, hierdurch wird eine höhere Steifigkeit der Anordnung erreicht, ohne dass ein hoher Materialeinsatz möglich ist.

Der Rastfuß weist vorzugsweise mehrere Schnappnasen zum Hintergreifen der Öffnung einer Kraftfahrzeugtür oder dergleichen auf. Diese können vorzugsweise entlang einer gedachten Kreislinie angeordnet sein, so dass sich die Kabelhalterung bei Bedarf in der Öffnung drehen lässt.

Eine besonders vorteilhafte Weiterbildung sieht vor, dass der Rastfuß eine bei Verrastung des Rastfußes in der Öffnung der Kraftfahrzeugtür oder dergleichen spannbare Dichtlippe zum Abdichten der Öffnung der Kraftfahrzeugtür aufweist. Dies ist insbesondere dann wichtig, wenn die erfindungsgemäße Kabelhalterung z.B. in einem Türmodul oder einem Türinnenblech eingesteckt ist, welche den Trocken- vom Nassbereich einer Tür trennen. Durch die erfindungsgemäß durch Verrastung spannbare Dichtlippe wird hier gleichzeitig ein flüssigkeitsdichter Verschluss der trennenden Wand (d.h. des Türinnenblechs bzw. des Türmoduls) erreicht, auch dies ist in Einhandbedienung leicht möglich, ohne dass spätere zusätzliche Abdichtmaßnahmen notwendig sind.

Eine weitere vorteilhafte Weiterbildung sieht vor, dass der Keil senkrecht zur Führungsrichtung der Keilführung einen T-förmigen Querschnitt aufweist. Hierdurch wird die Stabilität des Keiles erhöht, das Einpressen von Hand ist auch leichter möglich, da sich die Auflagefläche vergrößert. Ein Einbringen von mehreren Verraststufen ermöglicht ein sicheres Verklemmen des Keils und damit eine korrespondierenden Schnappnase in verschiedenen bzw. variierenden Öffnungsgeometrien.

Besonders vorteilhaft ist, dass die erfindungsgemäße Kabelhalterung einstückig herstellbar ist, ein Scharnier am Umfangselement lässt sich z.B. als integral zu spritzende Filmschiene ausbilden. Als Material bieten sich vorzugsweise Kunststoffe, insbesondere Polypropylen an. Dieses ist leicht spritzbar, die vorliegende Kabelhalterung ist in einer relativ einfach gestalteten Spritzform (eine "schieberfreie Form", ohne Hinterschneidungen) herstellbar.

Weitere vorteilhafte Weiterbildungen werden in den übrigen abhängigen Ansprüchen beschrieben.

Die vorliegende Erfindung wird nun anhand mehrerer Figuren erläutert. Es zeigen:
- Fign. 1a bis 2c: verschiedene Ansichten bzw. Schnitte einer erfindungsgemäßen Kabelhalterung,
- Fign. 3a und 3b: Ansichten bzw. Schnitte eines durch Keil- verschiebung zu fixierenden Rastfußes.

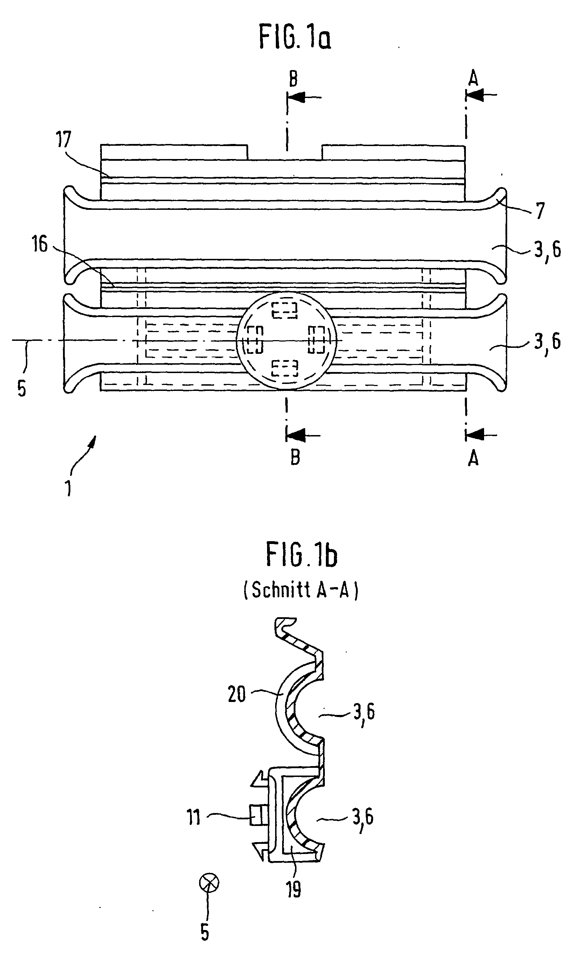

Fign. 1a bis 1c zeigen verschiedene Ansichten bzw.

Schnitte einer ersten Ausführungsform einer erfindungsgemäßen Kabelhalterung.

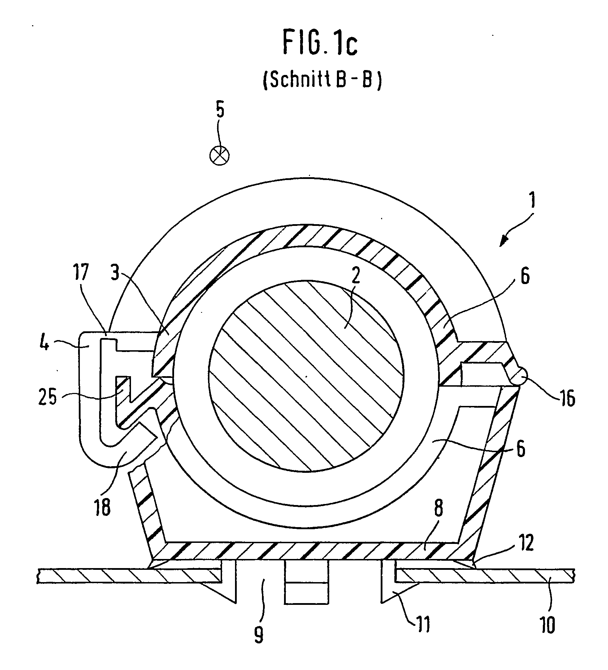

Hierbei zeigt Fig. 1a eine Ansicht einer einstückigen Kabelhalterung 1, deren Umfangselement 3 einen zu öffnenden Führungsmantel 6 aufweist. Der Führungsmantel 6 besteht aus zwei Zylinderhälften, wie in Fig. 1b ersichtlich ist, welche den Schnitt A-A zeigt. Die im geschlossenen Zustand des Umfangselementes bestehende Zylinderform des Führungsmantels 6 ist auf Fig. 1c ersichtlich, welche den Schnitt B-B darstellt.

In Fign. 1a bis 1c ist also eine Kabelhalterung 1 zu sehen mit einem Umfangselement 3 zum Fixieren eines Kabels 2 und einem Rastfuß 8 zum Festrasten der Kabelhalterung 1 in eine Öffnung 9 einer Kraftfahrzeugtür 10 (selbstverständlich können auch hier beliebige andere Öffnungen in Frage kommen). Das Umfangselement 3, zu welchem der Führungsmantel 6 gehört, ist zum vollumfänglichen Umfassen des Kabels 2 verschließbar. Das Umfangselement 3 weist über den Führungsmantel 6 hinaus noch ein Filmscharnier 16 zum Verbinden der halbzylindrischen Hälften des Führungsmantels 6 auf. In Fig. 1c auf der linken Seite ist außerdem der einstückig angefügte Schnappverschluss 4 zu sehen. Dieser weist einen an der in Fig. 1c oberen Zylinderhälfte angefügten Haken auf, welcher um ein Filmscharnier 17 schwenkbar ist. Am Ende des Schnappverschlusses 4 ist ein Haken 18 angebracht, welcher einen Vorsprung, welcher an der in Fig. 1c unteren Zylinderhälfte angebracht ist, hintergreift und somit das Umfangselement 3 bzw. den Führungsmantel 6 in seiner reversiblen geschlossenen Stellung hält. Der Vorsprung, welcher an der in Fig. 1c unteren Zylinderhälfte angebracht ist, weist einen im Wesentlichen senkrecht nach oben weisenden Steg 25 auf, welcher als Verrastungshilfe vorgesehen ist. Für die Verrastung ist dieses Bauteil hilfreich, allerdings nicht unbedingt notwendig (siehe auch Fig. lb). Generell sind verschiedene Rastmechanismen möglich, insbesondere Verrast- und Entrastkräfte der Rohrverrastung 18 können konstruktionsbedingt einfach verändert werden.

In Fig. 1c ist gut erkennbar, dass der Führungsmantel 6 einen im geschlossenen Zustand senkrecht zur Einführrichtung bzw. Achsenrichtung 5 des Kabels 2 runden Querschnitt aufweist. Die Form des Führungsmantels 6 in Richtung 5 ist aus Fig. 1a ersichtlich. Hierbei ist erkennbar, dass der Führungsmantel im Wesentlichen als Zylinder ausgeführt ist. Selbstverständlich ist es auch möglich, dass sich in Richtung 5 gekrümmte Bauformen, z.B. S-, V- oder W-förmige Verläufe ergeben. An den Enden 7 des Führungsmantels 6 ist der Führungsmantel trompetenförmig aufgeweitet, so dass ein Knicken eines aus dem Führungsmantel 6 herausgeführten Kabels auf ein Minimum beschränkt. Das Verhältnis des größten Innendurchmessers (also quasi am Ausgang der "Trompete") und dem Innendurchmesser im nicht aufgeweiteten Bereich des Führungsmantels 6 liegt hierbei vorzugsweise bei 1:1 bis 4:1.

Aus Fig. 1b ist zu ersehen, dass das Umfangselement 3 außerdem Abstützrippen 19 aufweist, welche senkrecht zur Richtung 5 angeordnet sind und welche den unteren Teil des Führungsmantels 6 mit einer Grundfläche des Rastfußes 8 verbinden.

Außerdem ist es möglich, eine Versteifung des oberen Teils des Führungsmantels 6 durch Abstützrippen 20 vorzusehen.

Im Folgenden soll auf den Rastfuß 8 eingegangen werden.

Dieser weist mehrere Schnappnasen 11 auf, welche (wie in Fig. 1c zu sehen) den Randbereich einer Öffnung 9 mit einer 1,5 mm dicken Blechlage (auch andere Blechdicken sind denkbar, z.B. 0,5 bis 3 mm oder mehr) eines Kraftfahrzeugtürinnenbleches hintergreifen (je nach Dicke der Blechlage sind unterschiedlich lange Schnappnasen vorzusehen, dies wird bei einer entsprechenden Auslegung des Werkzeuges zur Herstellung der Schnappnasen berücksichtigt). Die Schnappnasen 11 ragen aus einer Grundebene des Rastfußes 8 heraus. Auf dieser Grundebene ist außerdem eine den Randbereich der Grundebene umlaufende Dichtlippe 12 (oder nur ein Abstützkragen) vorgesehen. Diese Dichtlippe bzw. dieser Abstützkragen ist so konfiguriert, dass beim Einschnappen der Schnappnasen 11 in die Öffnung 9 die Dichtlippe oder der Abstützkragen gespannt wird, so dass im Falle einer Dichtlippe die Öffnung 9 durch die Dichtlippe 12 und die Grundebene des Rastfußes 8 flüssigkeitsdicht verschlossen wird. Die Rasthaken 11 können auch mittels eines Spreizdorns absolut fixiert werden.

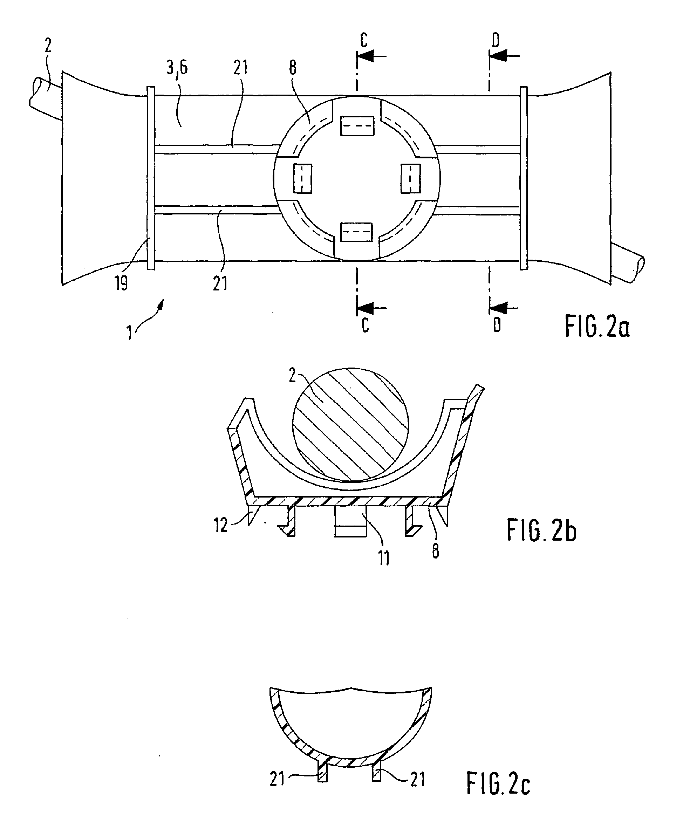

Fign. 2a bis 2c veranschaulichen weitere mögliche Details einer erfindungsgemäßen Kabelhalterung. Hierbei ist lediglich der Rastfuß 8 mit einer daran angefügten halbzylindrischen Hälfte des Führungsmantels 6 gezeigt, die obere Hälfte des Führungsmantels 6 wird aus Gründen der besseren Veranschaulichung nicht dargestellt.

In Fig. 2a ist eine Unteransicht einer erfindungsgemäßen Kabelhalterung 1 gezeigt. Hierbei sind in Längsrichtung des Führungsmantels 6 verlaufende Versteifungsrippen 19 gezeigt, außerdem sind damit verbundene Abstützrippen 21 zu sehen.

Fig. 2b zeigt einen Schnitt gemäß C-C, Fig. 2c zeigt einen Schnitt gemäß D-D, wobei die Abstützrippen 21 zu sehen sind.

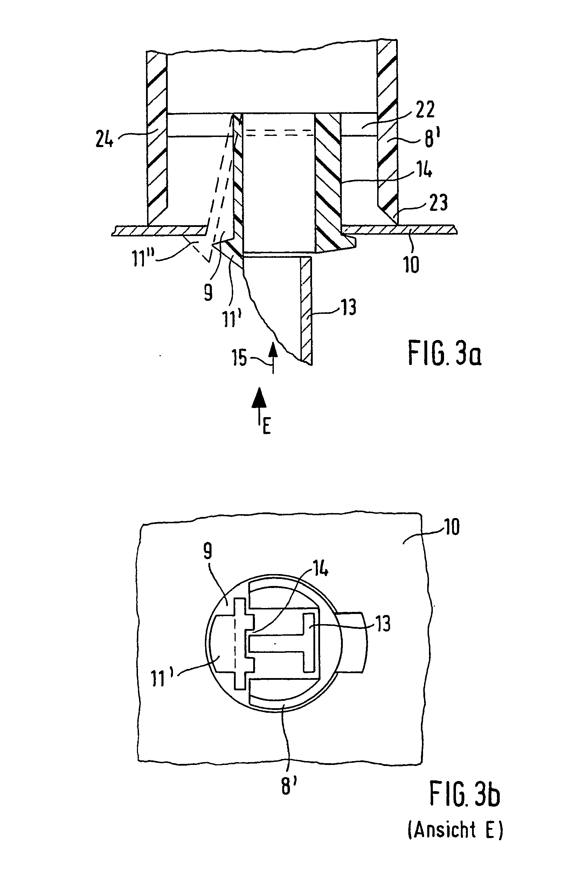

Fign. 3a und 3b zeigen Details des Rastfußes. Der in Fign. 3a und 3b gezeigte Rastfuß 8' ist mit dem oben beschriebenen Umfangselement 3 verbunden. Zur Vermeidung von Wiederholungen wurde auf die nochmalige Darstellung dieses Umfangselementes verzichtet.

Der Rastfuß 8' weist einen im Wesentlichen kreiszylindrischen Umfang 24 auf (auch andere Formen sind möglich), in welchem eine Grundebene 22 als Zwischenboden eingezogen ist. An der zur Kfz-Tür 10 bzw. der Öffnung hinweisenden Seite weist der Zylinder 24 eine spitzkantige Dichtlippe 23 auf, welche bei Verrastung des Rastfußes einen flüssigkeitsdichten Abschluss der Öffnung 9 bildet kann.

Aus dem Zwischenboden 22 ragt mindestens eine Schnappnase und ein fester Haken (als Gegenlager) heraus. Eine solche Schnappnase wird in Fig. 3a in ihrer Ausgangsstellung mit 11' bezeichnet. In ihrer den Rastfuß in der Öffnung 9 verrastenden und abdichtenden Stellung ist sie in Fig. 3a mit 11" bezeichnet.

Der Rastfuß 8 weist außerdem einen Keil 13 mit einer zugeordneten Keilführung 14 zum Aufspreizen und Fixieren des Rastfußes 8' in der Öffnung 9 auf.

Dieser Keil 13 ist in Fig. 3a in seiner Ausgangsstellung gezeigt. Bei Einführen des Keils 13 in Richtung 15 entlang der Führung 14 wird die Schnappnase 11' in die Position 11" bewegt, so dass sie den Rastfuß bezüglich der Öffnung 9 abdichtend fixiert. Ein Einbringen von mehreren Verraststufen ermöglicht ein sicheres Verklemmen des Keils 13 und damit der Schnappnase 11 in verschiedenen bzw. variierenden Öffnungsgeometrien.

Fig. 3b zeigt eine Ansicht E wie in Fig. 3a angedeutet. Hierbei ist zu sehen, dass der Keil 13 in Führungsrichtung 15 gesehen einen T-förmigen Querschnitt aufweist. Die Schnappnase 11' befindet sich in der Ausgangsstellung, durch Einführen des Keils 13 in die Blattebene hinein findet die oben beschriebene Verrastung des Rastfußes 8' in der Öffnung 9 statt.

Die oben gezeigten Kabelhalterungen sind vorzugsweise aus Kunststoffen einstückig im Spritzgußverfahren herstellbar. Als Werkstoff empfiehlt sich hierbei insbesondere Polypropylen.

Als Einsatzzweck empfiehlt sich die Montage dieser erfindungsgemäßen Kabelhalterung im Inneren von Kraftfahrzeugtüren, die Anwendung soll jedoch nicht auf diesen Bereich begrenzt sein.

## Patentansprüche

1. Kabelhalterung (1), insbesondere für ein oder mehrere elektrische Kabel (2) an Kraftfahrzeugen, mit einem Umfangselement (3) zum Fixieren des Kabels und einem Rastfuß (8) zum Festrasten der Kabelhalterung in einer Öffnung (5) einer Kraftfahrzeugtür (10) oder dergleichen, wobei das Umfangselement (3) zum vollumfänglichen Umfassen des Kabels verschließbar ist,
**dadurch gekennzeichnet,**
**dass** die Kabelhalterung einen Keil (13) mit einer zugeordneten Keilführung (14) zum Aufspreizen und Fixieren des Rastfußes (8') in der Öffnung (5) aufweist.

2. Kabelhalterung nach Anspruch 1, **dadurch gekennzeichnet, dass** das Umfangselement (3) einen zu öffnenden Schnappverschluss (4) aufweist.

3. Kabelhalterung nach einem der vorhergehenden Ansprüche, **dadurch gekennzeichnet, dass** das Umfangselement senkrecht zur Einführrichtung (5) des Kabels (2) einen im Wesentlichen ringförmigen Querschnitt aufweist.

4. Kabelhalterung nach einem der vorhergehenden Ansprüche, **dadurch gekennzeichnet, dass** das Umfangselement (3) einen koaxial zur Einführrichtung (5) angeordneten Führungsmantel (6) aufweist.

5. Kabelhalterung nach Anspruch 4, **dadurch gekennzeichnet, dass** der Führungsmantel (6) in Einführrichtung (5) des Kabels (2) eine Länge des zwei- bis zehnfachen des kleinsten Innendurchmessers des Umfangselementes aufweist.

6. Kabelhalterung nach einem der Ansprüche 4 oder 5, **dadurch gekennzeichnet, dass** der Führungsmantel (6) in Einführrichtung (5) des Kabels (2) aufgeweitete Enden (7) aufweist.

7. Kabelhalterung nach einem der Ansprüche 4, 5 Oder 6, **dadurch gekennzeichnet, dass** der Führungsmantel (6) mit dem Rastfuß (8) über zu dem Umfangselement (2) gehörende Abstützrippen (19) verbunden ist.

8. Kabelhalterung nach einem der vorhergehenden Ansprüche, **dadurch gekennzeichnet, dass** der Rastfuß (8) mehrere Schnappnasen (11) zum Hintergreifen der Öffnung (9) einer Kfz-Tür (10) oder dergleichen aufweist.

9. Kabelhalterung nach einem der vorhergehenden Ansprüche, **dadurch gekennzeichnet, dass** der Rastfuß (8) eine bei Verrastung des Rastfußes in der Öffnung (9) spannbare Dichtlippe (12) zum Abdichten der Öffnung aufweist.

10. Kabelhalterung nach Anspruch 1, **dadurch gekennzeichnet, dass** der Keil (13) senkrecht zur Führungsrichtung (15) der Keilführung (14) einen T-förmigen Querschnitt aufweist.

11. Kabelhalterung nach einem der vorhergehenden Ansprüche, **dadurch gekennzeichnet, dass** diese einstückig ist.

12. Kabelhalterung nach einem der vorhergehenden Ansprüche, **dadurch gekennzeichnet, dass** diese aus Kunststoff, vorzugsweise aus Polypropylen ist.

13. Kraftfahrzeugtür, welche eine tragende Grundstruktur aufweist mit einer Öffnung, in der eine Kabelhalterung nach einem der Ansprüche 1 bis 12 fixiert ist.

## Claims

1. A cable holding device (1), in particular for one or more electrical cables (2) on motor vehicles, with a peripheral element (3) for fixing the cable and with a locking foot (8) for firmly locking the cable holding device in an opening (5) of a motor vehicle door (10) or likewise, where the peripheral element (3) is closable for completely peripherally encompassing the cable, **characterised in that** this comprises a wedge (13) with an associated wedge guide (14) for expanding and fixing the locking foot (8') in the opening (5).

2. A cable holding device according to claim 1, **characterised in that** the peripheral element (3) comprises a snap closure (4) to be opened.

3. A cable holding device according to one of the preceding claims, **characterised in that** the peripheral element has an essentially annular cross-section perpendicular to the introduction direction (5) of the cable (2).

4. A cable holding device according to one of the preceding claims, **characterised in that** the peripheral element (3) comprises a guide casing (6) arranged coaxially to the introduction direction (5).

5. A cable holding device according to claim 4, **characterised in that** the guide casing (6) in the introduction direction (5) of the cable (2) has a length of two to ten times the smallest inner diameter of the peripheral element.

6. A cable holding device according to one of the claims 4 or 5, **characterised in that** the guide casing (6) in the introduction direction (5) of the cable (2) comprises widened-out ends.

7. A cable holding device according to one of the claims 4, 5 or 6, **characterised in that** the guide casing (6) is connected to the locking foot (8) via support ribs (19) which belong to the peripheral element (2).

8. A cable holding device according to one of the preceding claims, **characterised in that** the locking foot (8) comprises several snap lugs (11) for engaging behind the opening (9) of a motor vehicle door (10) or likewise.

9. A cable holding device according to one of the preceding claims, **characterised in that** the locking foot (8) comprises a sealing lip (12) which may be tensioned on locking the locking foot in the opening (9), for sealing the opening.

10. A cable holding device according to claim 1 **characterised in that** the wedge (13) perpendicular to the guide direction (15) of the wedge guide (14) has a T-shaped cross section.

11. A cable holding device according to one of the preceding claims, **characterised in that** this is of one piece.

12. A cable holding device according to one of the preceding claims, **characterised in that** this is of plastic, preferably of polypropylene.

13. A motor vehicle door which has a supporting base structure with an opening, in which a cable holding device according to one of the claims 1-12 is held.

## Revendications

1. Support de câble (1), en particulier pour un ou plusieurs câbles électriques (2) dans des véhicules automobiles, avec un élément d'entourage (3) pour la fixation du câble et un pied d'encliquetage (8) pour l'accrochage du support de câble dans une ouverture (5) d'une porte de véhicule automobile (10) ou similaire, l'élément d'entourage (3) étant propre à être fermé pour entourer totalement le câble,
**caractérisé en ce que** le support de câble comporte une clavette (13) avec un guide-clavette (14) associé pour l'écartement et la fixation du pied de clipsage (8') dans l'ouverture (5)

2. Support de câble selon la revendication 1, **caractérisé en ce que** l'élément d'entourage (3) comporte une fermeture à cliquet (4) à ouvrir.

3. Support de câble selon l'une quelconque des revendications précédentes, **caractérisé en ce que** l'élément d'entourage présente, perpendiculairement à la direction d'introduction (5) du câble (2), une section de forme sensiblement annulaire.

4. Support de câble selon l'une quelconque des revendications précédentes, **caractérisé en ce que** l'élément d'entourage (3) comporte une enveloppe de guidage (6) disposée coaxialement à la direction d'introduction (5).

5. Support de câble selon la revendication 4, **caractérisé en ce que** l'enveloppe de guidage (6) présente, dans la direction d'introduction (5) du câble (2), une longueur qui est de deux à dix fois le plus petit diamètre intérieur de l'élément d'entourage.

6. Support de câble selon l'une quelconque des revendications 4 ou 5, **caractérisé en ce que** l'enveloppe de guidage (6) présente des extrémités (7) élargies dans la direction d'introduction (5) du câble (2).

7. Support de câble selon l'une quelconque des revendications 4, 5 ou 6, **caractérisé en ce que** l'enveloppe de guidage (6) est reliée au pied de clipsage (8) par des nervures d'appui (19) faisant partie de l'élément d'entourage (2).

8. Support de câble selon l'une quelconque des revendications précédentes, **caractérisé en ce que** le pied de clipsage (8) présente plusieurs ergots à cliquet (11) pour passer derrière l'ouverture (9) d'une porte de véhicule automobile (10) ou similaire.

9. Support de câble selon l'une quelconque des revendications précédentes, **caractérisé en ce que** le pied de clipsage (8) présente une lèvre d'étanchéité (12), propre à être tendue lors de l'accrochage du pied de clipsage dans l'ouverture (9), pour rendre l'ouverture étanche.

10. Support de câble selon la revendication 1, **caractérisé en ce que** la clavette (13) présente, perpendiculairement à la direction de guidage (15) du guide-clavette (14), une section transversale en forme de T.

11. Support de câble selon l'une quelconque des revendications précédentes, **caractérisé en ce que** celui-ci est d'un seul tenant.

12. Support de câble selon l'une quelconque des revendications précédentes, **caractérisé en ce que** celui-ci est en matière plastique, de préférence en polypropylène.

13. Porte de véhicule automobile qui présente une structure de base portante avec une ouverture dans laquelle est fixé un support de câble selon l'une quelconque des revendications 1 à 12.
